# DEMANDE DE BREVET EUROPEEN

(11) **EP 4 475 087 A1**
(43) Date de publication de la demande: **11.12.2024**
(21) Numéro de dépôt: 24180908.6
(22) Date de dépôt: 07.06.2024
(51) Int. Cl.: G06V 10/12, G06V 10/26, G06V 10/28, G06V 10/30, G06V 20/52, G06T 7/70, G08G 5/00

(54) **PROCÉDÉ DE SURVEILLANCE DE TRAFIC AÉRIEN**

(30) Priorité: 07.06.2023 FR 2305758
(71) Demandeur: Hologarde, 91550 Paray-Vieille-Poste (FR)
(72) Inventeur: ANDREOLETTI, Rémi, 27450 Saint-Benoit-des-Ombres (FR); PEREZ, Martin, Hervé, Thierry, 75015 Paris (FR)
(74) Mandataire: Ernest Gutmann - Yves Plasseraud S.A.S.

(57) **Abrégé**

Le présent document concerne un procédé de détection d'un aéronef en phase d'atterrissage sur un aérodrome, en particulier non contrôlé, l'aérodrome comprenant au moins une piste (V1) comportant au moins deux extrémités (E1, E2), et au moyen d'un système optronique comportant au moins une caméra primaire (18, 18a, 18b, 18c, 18d) dont une ouverture angulaire primaire (Pa, Pb, Pc, Pd) est orientée vers une première extrémité (E1) de la piste (V1), le procédé comprenant la détermination de la présence ou non, dans une région de fin d'approche (104) ou de fin d'éloignement, d'un objet compatible avec un aéronef, et le cas échéant analyse du trajet de l'objet détecté par comparaison de sa position actuelle avec un historique des positions d'objets détectés dans une zone d'analyse (104).

## Description

### Domaine technique

La présente divulgation relève du domaine des systèmes et procédés de surveillance de trafic aérien plus particulièrement à destination des aérodromes de type non contrôlés.

### Technique antérieure

Les aérodromes contrôlés et non contrôlés sont deux types d'infrastructures aéroportuaires qui diffèrent par la présence ou l'absence d'une tour de contrôle et de services de contrôle du trafic aérien. Chacun de ces types offre des caractéristiques et des procédures distinctes pour les pilotes et les opérations aériennes.

Un aérodrome contrôlé est doté d'une tour de contrôle où des contrôleurs du trafic aérien travaillent pour gérer les mouvements des aéronefs. Les CTA (les contrôleurs de trafic aérien) assurent la sécurité des opérations aériennes en fournissant des services de contrôle aérien, tels que la gestion des décollages, des atterrissages et du trafic en vol. Les pilotes établissent une communication radio avec la tour de contrôle et suivent les instructions émises par les contrôleurs pour leurs mouvements sur l'aérodrome et dans l'espace aérien contrôlé environnant. Les aérodromes contrôlés offrent également des instruments de navigation avancés, tels que des aides à l'approche et des systèmes d'atterrissage aux instruments (ILS), qui facilitent les opérations de vol dans des conditions météorologiques défavorables.

En revanche, les aérodromes non contrôlés ne disposent pas d'une tour de contrôle ni de contrôleurs du trafic aérien. Les pilotes qui opèrent sur ces aérodromes utilisent une fréquence radio spécifique pour communiquer entre eux et partager des informations relatives aux mouvements sur l'aérodrome. Ils sont responsables de leur propre sécurité et de la gestion du trafic aérien, en respectant les procédures standard et en faisant preuve d'une vigilance accrue pour éviter les conflits potentiels avec d'autres aéronefs. Les aérodromes non contrôlés sont généralement équipés d'aides visuelles telles que des balises, des panneaux d'identification de piste et des marques au sol pour faciliter la navigation des pilotes.

Les aérodromes non contrôlés sont bien plus nombreux que les aérodromes contrôlés, car de nombreuses régions rurales et éloignées ne nécessitent pas de services de contrôle du trafic aérien.

Dans de nombreux pays, il existe un grand nombre d'aérodromes non contrôlés utilisés principalement pour l'aviation générale, les vols de loisir, les opérations agricoles, les vols d'entraînement, etc. Ces aérodromes peuvent être de petites installations locales, des aérodromes de formation, des aérodromes de sports aériens, des aérodromes de secours, et bien d'autres encore. À titre d'exemple, en France, on compte environ 450 à 500 aérodromes du type non contrôlés.

Les aérodromes non contrôlés peuvent être classés en deux catégories selon qu'il comprenne un service AFIS (Aerodrome Flight Information Service) ou non.

Le service AFIS (Aerodrome Flight Information Service) est un type de service de contrôle du trafic aérien fourni dans certains aérodromes non contrôlés. Contrairement aux aérodromes contrôlés qui ont une tour de contrôle et des contrôleurs du trafic aérien, les aérodromes non contrôlés avec le service AFIS sont dotés d'un service d'information au vol (Flight Information Service).

Le service AFIS est généralement assuré par du personnel qualifié appelé "Flight Information Service Officer" (FISO). Les FISO sont chargés de fournir des informations et des conseils aux pilotes opérant sur l'aérodrome et dans ses environs. Leur rôle principal est d'assurer la sécurité des opérations aériennes en fournissant des informations pertinentes sur les conditions météorologiques, le trafic aérien local, les procédures d'aérodrome et d'autres renseignements utiles aux pilotes.

Les FISO sont responsables de la surveillance du trafic aérien en utilisant des moyens visuels, tels que des jumelles ou des dispositifs électroniques, pour aider à l'identification et à la séparation des aéronefs. Ils peuvent également fournir des conseils et des instructions aux pilotes, notamment pour les mouvements au sol, les décollages et les atterrissages, tout en coordonnant les activités des aéronefs sur l'aérodrome.

Il est important de relever que le service AFIS ne constitue pas un contrôle du trafic aérien au sens strict, mais il offre aux pilotes une source d'information et de soutien pour les aider à prendre des décisions éclairées concernant leurs vols. Il vise à améliorer la sécurité des opérations dans les aérodromes non contrôlés en fournissant une assistance limitée, mais précieuse aux pilotes.

De plus en plus d'aérodromes contrôlés sont transformés en aérodromes non contrôlés du d'un trafic aérien insuffisant et/ou de couts d'exploitation (normes à respecter ...) qui augmentent.

Or, le passage en aérodrome non contrôlé conduit aux difficultés suivantes :
- connaître le trafic aérien d'un aérodrome,
- percevoir les redevances associées à ce trafic aérien,
- connaître l'état des infrastructures (état des pistes, incendie, accident, etc.)
- aménager les horaires de vols pour optimiser le bruit autour de l'aérodrome.

On comprend donc que la détection des aéronefs sur un aérodrome non contrôlé s'avère importante. À cette fin, il a déjà été proposé des systèmes de détection automatique du trafic aérien. Ils s'appuient sur :
- des systèmes optiques ou radar provenant du milieu automobile, avec des portées de quelques dizaines de mètres, ce qui impose une installation d'équipement à chaque sortie d'une voie de circulation d'un aérodrome (taxiway),
- des systèmes de surveillance coopératifs de type ADS-B (Automatic dépendent surveillance-broadcast), mais qui équipent qu'une partie très limitée de la flotte d'aéronefs d'aérodrome (de l'ordre de 10 à 20%) ,
- des systèmes TCAS (Traffic Alert and Collision Avoidance System), mais qui équipent une partie très limitée de la flotte d'aéronefs d'aérodrome, puisque cela concerne les avions de plus de 5 700 kg ou ceux autorisés à transporter plus de 19 passagers qui ne constituent pas l'essentiel de la flotte des aéronefs utilisant les aérodromes non contrôlés.

Ces systèmes s'avèrent contraignants en termes d'installation pour le gestionnaire de l'aérodrome, et ne couvrent pas l'ensemble du trafic aérien de l'aérodrome.

Par ailleurs, aucun des systèmes actuels ne permet de faire un suivi simple et rapide d'un aéronef de manière à donner une information certaine d'atterrissage d'un aéronef.

À l'heure actuelle, la grande variabilité des situations sur les aérodromes empêche de mettre au point un algorithme suffisamment fiable pour réaliser une détection d'un aéronef et uniquement d'un aéronef. Parmi les éléments qui impactent la détection, on notera :
- Le mouvement des arbres par grand vent,
- Le mouvement des herbes par vent moyen,
- Des ombres de nuages au sol se déplaçant,
- Des nuages de fumées,
- Les voitures en circulation dans le champ de la caméra,
- Les oiseaux, qui en fonction de leur emplacement, ont la taille apparente d'un avion pour la caméra.

Le présent document vise donc à proposer une solution universelle de surveillance du trafic aérien qui soit simple à mettre en oeuvre.

### Résumé

Le présent document concerne un procédé de détection d'un aéronef en phase d'atterrissage ou de décollage sur un aérodrome, en particulier non contrôlé, l'aérodrome comprenant au moins une piste comportant au moins deux extrémités, et au moyen d'un système optronique comportant au moins une caméra primaire dont une ouverture angulaire primaire est orientée vers une première extrémité de la piste, le procédé comprenant les étapes :
- Détermination d'un ensemble de trajectoires possibles d'approche ou d'éloignement sur ladite au moins une piste,
- Détermination d'une position de ladite au moins une caméra primaire de manière à ce que son ouverture angulaire primaire comprenne ledit ensemble de trajectoires possibles,
- Détermination, dans l'ouverture angulaire primaire, d'une zone d'analyse conformée de manière à comprendre l'ensemble desdites trajectoires d'approche ou d'éloignement et de préférence située au-dessus de l'horizon ;
- Détermination d'une région de fin d'approche ou de fin d'éloignement dans la zone d'analyse ;
- Réalisation, dans ladite zone d'analyse, d'une détection d'objets ayant une taille compatible avec celle d'un aéronef,
- Détermination de la présence ou non, dans la région de fin d'approche ou de fin d'éloignement, d'un objet compatible avec un aéronef, et le cas échéant analyse du trajet de l'objet détecté par comparaison de sa position actuelle avec un historique des positions d'objets détectés dans la zone d'analyse et compris en base de données.

En pratique, sur une journée au moins ou plusieurs, les vols des aéronefs sont enregistrés de manière à identifier toutes les trajectoires possibles. Il convient d'avoir au moins une centaine de vols pour être certain d'avoir l'ensemble des trajectoires possibles. On comprend que l'ensemble de trajectoires d'approche ou d'éloignement est un ensemble permettant de positionner en trois dimensions les trajectoires d'approche ou d'éloignement par rapport à la piste.

La zone d'approche ou d'éloignement des aéronefs peut ainsi être choisie pour être inférieure à l'ouverture angulaire primaire de la seconde caméra, ce qui permet de réduire la zone analysée en temps réel.

Selon une autre caractéristique, l'indication qu'un aéronef est en phase d'approche ou d'éloignement peut être réalisée en vérifiant que :
a) Au moins un objet a été détecté dans la zone d'approche ou d'éloignement et sur au moins k images Im-S4ᵢ, i variant de 1 à k, k étant un entier naturel supérieur ou égal à 1, lesdites au moins k images Im-S4ᵢ précédant temporellement l'image Im-S4ₐ pour laquelle un objet a été détecté dans la région de fin d'approche ou de fin d'éloignement,
b) il existe au moins k images Im-S4ᵢ comprenant au moins un objet de taille compatible avec celle d'un aéronef et l'abscisse de chacun des objets est supérieure (ou inférieure selon que l'objet supposé être un aéronef, arrive vers une extrémité ou l'autre de la piste) à l'abscisse de l'objet détecté dans la région de fin d'approche ou de fin d'éloignement,
c) déterminer tous les trajets possibles entre les objets des images Im-S4ᵢ successives, i variant de 1 à k, et aboutissant à l'objet identifié sur l'image Im-S4ₐ, puis on valide qu'une trajectoire suit sensiblement ou non une ligne droite.

Selon le présent document, les trois conditions précitées doivent avoir été validées pour pouvoir confirmer qu'un aéronef est bien dans la région de fin d'approche ou de fin d'éloignement. La dernière étape de régression linéaire permet de confirmer l'aspect non chaotique de la trajectoire. En effet, une trajectoire chaotique serait incompatible avec la trajectoire d'un aéronef, mais pourrait être compatible avec la trajectoire d'un volatile ayant une taille compatible avec celle d'un aéronef, du fait par exemple d'une localisation plus proche que celle d'un aéronef.Un entier naturel p peut être compris entre 2 et k, et l'indication qu'un aéronef est en phase d'approche ou d'éloignement peut être réalisée en effectuant en outre les étapes suivantes :
- calcul, par exemple en pixels, des différences d'abscisses Δ_{abs} et/ou des différences d'ordonnées Δ_{ord} dudit au moins un objet entre deux images successives parmi les p images Im-S4_{q}, q variant de 1 à p, et
- détermination du signe des Δ_{abs} et/ou des Δ_{ord}.

Par abscisse et ordonnée, on entend les coordonnées suivant l'axe horizontal et l'axe vertical respectivement.

L'axe horizontal présente un sens allant de l'extrémité de la piste par laquelle l'aéronef atterrit (entrée de la piste) à l'extrémité de la piste par laquelle l'aéronef décolle (sortie de la piste). L'axe vertical présente un sens allant du bas vers le haut (i.e. du sol vers le ciel).

Par différences d'abscisses et différences d'ordonnées entre une seconde image et une première image qui précède la seconde image (i.e. la seconde image suit la première image), on entend la différence entre l'abscisse de la seconde image et l'abscisse de la première image et la différence entre l'ordonnée de la seconde image et l'ordonnée de la première image respectivement. Les différences d'abscisses et différences d'ordonnées peuvent donc être négatives.

Plus spécifiquement, la détermination du signe des Δ_{abs} et/ou des Δ_{ord} peut comprendre la détermination :
-- dans le cas d'une phase d'approche, si les Δ_{abs} sont positives (i.e. > 0) et/ou les Δ_{ord} sont négatives (i.e. < 0) ; et/ou
-- dans le cas d'une phase d'éloignement, si les Δ_{abs} sont positives (i.e. > 0) et/ou les Δ_{ord} sont positives (i.e. > 0).

En particulier, dans le cas d'une phase d'approche, si les Δ_{abs} sont positives (i.e. > 0) et/ou les Δ_{ord} sont négatives (i.e. < 0), il est possible de déduire le cas échéant que ledit au moins un objet est un aéronef en phase d'approche.

Dans le cas d'une phase d'éloignement, si les Δ_{abs} sont positives (i.e. > 0) et/ou les Δ_{ord} sont positives (i.e. > 0), il est possible de déduire le cas échéant que ledit au moins un objet est un aéronef en phase d'éloignement.

De cette manière, on renforce la détermination de l'indication qu'un aéronef est en phase d'approche ou d'éloignement en filtrant les objets effectuant des allers-retours horizontaux et/ou verticaux. Par exemple, cela peut être le cas des objets, tels que des volatiles, qui présentent des différences d'abscisses et d'ordonnées de signes variables ou non cohérents par rapport à un atterrissage ou décollage d'un aéronef.

Selon un aspect, il est possible de déterminer uniquement le signe des Δ_{abs}.

L'indication qu'un aéronef est en phase d'approche ou d'éloignement peut être réalisée en effectuant en outre l'étape suivante :
- Détermination qu'un aéronef est en phase d'approche ou d'éloignement par comparaison des Δ_{abs} et/ou des Δ_{ord} avec une valeur minimale et/ou maximale prédéterminée à partir d'un historique de différences d'abscisses et différences d'ordonnées compris en base de données.

Autrement dit, on s'assure que les Δ_{abs} et/ou Δ_{ord} précédemment calculées sont comprises dans une plage comprenant comme borne inférieure la valeur minimale prédéterminée et/ou comme borne supérieure la valeur maximale prédéterminée.

Selon un aspect, si les Δ_{abs} et/ou Δ_{ord} sont compris dans ladite plage, il est possible de déduire le cas échéant que ledit au moins un objet est un aéronef en phase d'approche ou d'éloignement.

De cette manière, on garantit une cohérence différences d'abscisses et des différences d'ordonnées précédemment calculées, et on renforce une nouvelle fois la détermination de l'indication qu'un aéronef est en phase d'approche ou d'éloignement.

Il convient de comprendre que l'historique de différences d'abscisses et différences d'ordonnées peut provenir d'au moins une centaine de vols d'aéronefs, de préférence plusieurs centaines.

L'indication qu'un aéronef est en phase d'approche ou d'éloignement peut être réalisée en effectuant en outre les étapes suivantes :
- Calcul de l'écart type des différences d'abscisses σ_{abs} et/ou de l'écart type des différences d'ordonnées σ_{ord}, et
- Détermination qu'un aéronef est en phase d'approche ou d'éloignement par comparaison de σ_{abs} et/ou σ_{ord} avec un écart type seuil d'abscisse σ_{seuil_abs} et/ou un écart type seuil d'ordonnée σ_{seuil_ord} respectivement, σ_{seuil_abs} et σ_{seuil_ord} étant prédéterminés à partir de l'historique de différences d'abscisses et différences d'ordonnées.

σ_{seuil_ab} et σ_{seuil_ord} mesurent la dispersion des valeurs autour de leur moyenne respective. En réalisant cette comparaison, on peut évaluer à quel point les Δ_{abs} et Δ_{ord} diffèrent de la moyenne en termes de variabilité.

Plus particulièrement, si au moins une des Δ_{abs} et/ou des Δ_{ord} précédemment calculées est inférieure ou égale à σ_{seuil_abs} et/ou σ_{seuil_ord} respectivement, alors il est possible de déduire le cas échéant que ledit au moins un objet est un aéronef en phase d'approche.

Le système optronique peut comprendre au moins une seconde caméra primaire dont une ouverture angulaire primaire est orientée vers une seconde extrémité de la piste, le procédé comprenant :
- l'identification des trajectoires possibles de sortie de piste d'un aéronef en seconde extrémité de piste ;
- la classification desdites trajectoires possibles en trois comportements possibles, un premier comportement correspondant à un atterrissage réel, un second comportement correspondant à un touché de piste sans atterrissage et le troisième comportement correspondant à un survol de la piste à basse altitude,
- Détermination d'une position de la seconde caméra primaire de manière à ce que son ouverture angulaire primaire comprenne toutes les trajectoires possibles de sortie de piste,
- Détermination, dans l'ouverture angulaire primaire de la seconde caméra primaire, de trois zones, une première zone de bout de piste correspondant au premier comportement, une seconde de bout de piste correspondant au deuxième comportement et une troisième zone de bout de piste correspondant au troisième comportement.

À partir d'une trajectoire d'approche ou d'éloignement d'un aéronef, il est difficile de déterminer si l'aéronef va effectivement atterrir, juste toucher la piste ou juste survoler la piste à basse altitude (dans le cas d'un atterrissage), ou bien effectivement décoller. La discrimination de ces scénarios n'étant pas possible à partir de la seule trajectoire d'approche ou d'éloignement, il convient alors de réaliser une analyse à l'aide d'une seconde caméra primaire agencée au niveau de la seconde extrémité de la piste.

Évidemment, on comprend que la première caméra primaire peut jouer le rôle de la seconde caméra primaire selon le sens des atterrissages ou décollages des aéronefs.

Une trajectoire de sortie de piste est ici une trajectoire de sortie de la zone d'observance de seconde extrémité de la piste.

Le procédé peut encore comprendre :
- Un enregistrement en continu de l'ouverture angulaire de la caméra primaire,
- Pour une image donnée à un instant donné t :
   o réaliser la moyenne de x images précédents temporellement l'image donnée et obtenir une image moyennée,
   o Soustraire l'image donnée à l'image moyennée.

La moyenne des x images précédentes est réalisée pixel à pixel. Le nombre x d'images utilisées pour faire la moyenne s'avère important et sera déterminé par itérations successives.

De préférence, on appliquera une étape de dilatation à l'image donnée.

Cette étape de dilatation permet de fermer les contours. De préférence, les objets ayant une surface supérieure à une taille prédéterminée sont éliminés.

La position de la caméra primaire peut être déterminée de manière à ce que son ouverture angulaire primaire comprenne une intersection de ladite au moins une piste avec une voie de circulation.

Une voie de circulation est une voie d'accès de l'aéronef à la piste de décollage/d'atterrissage depuis une zone d'arrêt de l'aéronef. Selon le présent document, l'ouverture angulaire primaire d'une caméra primaire comprend à la fois une extrémité de la piste et ladite zone de jonction, ce qui permet d'identifier qu'un aéronef entre sur la piste ou sort de celle-ci.

Le procédé peut comprendre la détermination d'une région d'intersection dans l'ouverture angulaire primaire de la caméra primaire, cette région d'intersection englobant l'intersection de ladite au moins une piste avec la voie de circulation.

La zone d'analyse peut comprendre une zone d'approche ou d'éloignement délimitée inférieurement par une première ligne basse agencée au-dessus de la piste et supérieurement par une seconde ligne haute agencée au-dessus de la première ligne, la zone d'approche ou d'éloignement étant reliée à la région de fin d'approche ou de fin d'éloignement.

La première ligne basse peut présenter une inclinaison d'un angle α non nul par rapport à l'axe de ladite au moins une piste. α peut être supérieur ou égal à 3°.

L'angle minimal devrait être choisi comme étant la valeur minimale donnée par une administration compétente en matière de législation aéronautique pour l'aérodrome considéré. En France, la valeur minimale est de 3° avec un écart possible de 0,5°.

Cette inclinaison supérieure d'au moins 3° par rapport à l'axe de la piste permet d'enlever une partie du décor susceptible d'entrainer des détections dites faux positives d'un aéronef.

La seconde ligne haute peut présenter une inclinaison d'un angle β supérieur à l'angle α, l'angle β étant déterminé comme correspondant à l'angle maximal possible d'arrivée d'un aéronef sur ladite au moins une piste.

En pratique, une valeur de 9° correspond à un standard d'approche ou d'éloignement.

Le système optronique utilisé avec le procédé décrit précédemment peut comprendre une caméra secondaire mobile en rotation autour d'un axe vertical de manière à ce que son axe optique puisse suivre un aéronef en mouvement, le procédé comprenant une étape subséquente de suivi d'un aéronef après indication de la présence d'un aéronef dans la région de fin d'approche ou de fin d'éloignement.

### Brève description des dessins

D'autres caractéristiques, détails et avantages apparaîtront à la lecture de la description détaillée ci-après, et à l'analyse des dessins annexés, sur lesquels :
[Fig. 1] illustre un système optronique selon le présent document dans une position non déployée en figure 1A et en position déployée et prêt à être utilisé en figure 1B ;
[Fig. 2] est une vue schématique en perspective d'un système optronique selon le présent document dans une position non déployée, le système étant présenté sans les éléments de support visibles en figure 1 ;
[Fig. 3] est une vue schématique en perspective d'une partie du mât supportant une pluralité de caméras primaires et selon une orientation du bas vers le haut
[Fig. 4] est une vue à plus grande échelle des moyens de déplacement de chaque caméra primaire afin de réaliser un positionnement statique de la caméra primaire dans une position souhaitée
[Fig. 5] est une vue schématique du système, similaire à la figure 3, et vu selon une orientation du haut vers le bas ;
[Fig. 6] représente un logigramme d'interaction des moyens de pilotage en déplacement de la caméra secondaire ;
[Fig. 7] est une vue schématique illustrant plusieurs configurations de pistes de décollage/atterrissage existantes sur un aérodrome non contrôlé ;
[Fig. 8] est une vue schématique illustrant une voie de circulation en jonction avec une piste de décollage/atterrissage sur un aérodrome non contrôlé ;
[Fig. 9] comprend une partie A qui représente une image d'une zone d'espace observée au travers d'une ouverture angulaire d'une première caméra primaire orientée vers une première extrémité d'une piste et la partie B représente une image d'une zone d'espace observée au travers d'une ouverture angulaire d'une seconde caméra primaire orientée vers une seconde extrémité de la piste ;
[Fig. 10] est une image d'une autre zone d'espace observée au travers d'une ouverture angulaire d'une caméra primaire orientée vers une autre extrémité d'une piste ;
[Fig. 11] est une image à plus grande échelle d'une partie de la figure 10 ;
[Fig. 12] est une illustration des étapes de détection d'un mouvement dans l'ouverture angulaire d'une caméra primaire ;
[Fig. 13] est une illustration de plusieurs tentatives de détection de mouvements dans une image donnée acquise par la caméra primaire ;
[Fig. 14] est un logigramme des étapes de détection d'objets et d'indication de la présence d'un aéronef dans une région de fin d'approche ;
[Fig. 15] illustre différents trajets possibles obtenus à partir d'images stockées en base de données ;
[Fig. 16] illustre un trajet d'atterrissage possible obtenu à partir d'images stockées en base de données.

### Description des modes de réalisation

La description ci-après présente un système 10 selon l'invention et un procédé destiné plus particulièrement à l'utilisation dudit système. Le procédé peut être mis en oeuvre lors d'une phase d'approche/atterrissage ou lors d'une phase de décollage. La présente description est réalisée en relation avec la phase d'atterrissage, mais s'applique également à la phase de décollage.

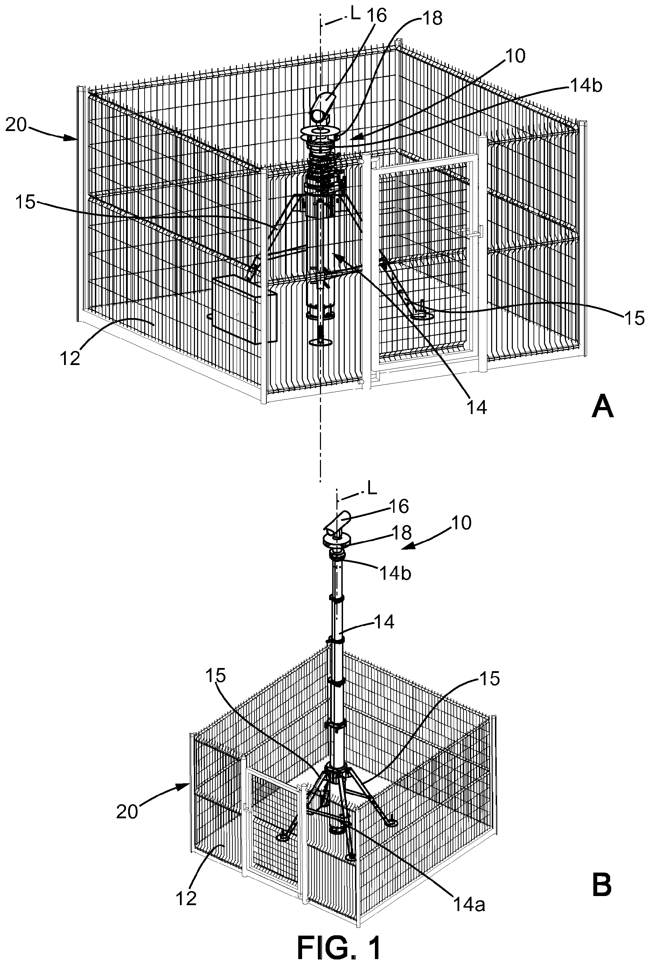

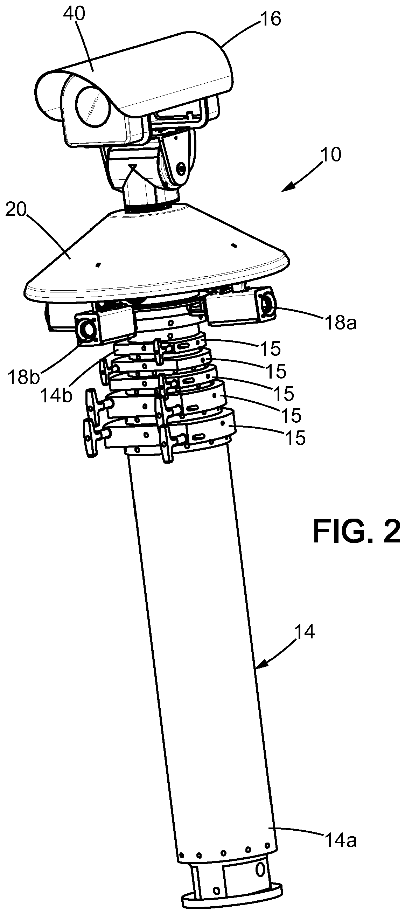

Il est maintenant fait référence à la figure 1 qui représente un système **10** selon le présent document. Le système **10** peut être installé sur un support **12** plan tel qu'une dalle béton. Il comprend un mât **14** portant une caméra secondaire **16** mobile en rotation autour de l'axe longitudinale et au moins deux caméras primaires **18** (mieux visibles en figure 2) qui sont fixes. Par caméra mobile en rotation et caméra fixe, on entend qu'en fonctionnement la caméra est apte à se déplacer et par caméra statique ou fixe, on entend que la caméra est fixe en fonctionnement, c'est-à-dire lorsque le système est utilisé. Évidemment, pour le réglage du positionnement des caméras primaires **18,** celles-ci peuvent être reliées à des moyens de déplacement appropriés comme on le verra dans ce qui suit.

Le mât 14 peut être avantageusement télescopique comme illustré sur les figures 1A et 1B et peut ainsi comprendre une pluralité de segments tubulaires **15** agencés les uns à l'intérieur des autres. Le système **10** est ici entouré par un enclos **20** de protection visant à éviter les dégradations par des personnes non autorisées (intrusions) ou dues à des impacts par aéronefs (impacts de bout d'aile). Le mât **14** s'étend suivant un axe longitudinal L lequel est agencé en position verticale. Il comprend une extrémité inférieure ou première extrémité **14a** et une extrémité supérieure ou seconde extrémité **14b.** Le mât 14 est maintenu en position verticale par une pluralité de bras de support 15 articulé en rotation entre une position de support et une position d'attente.

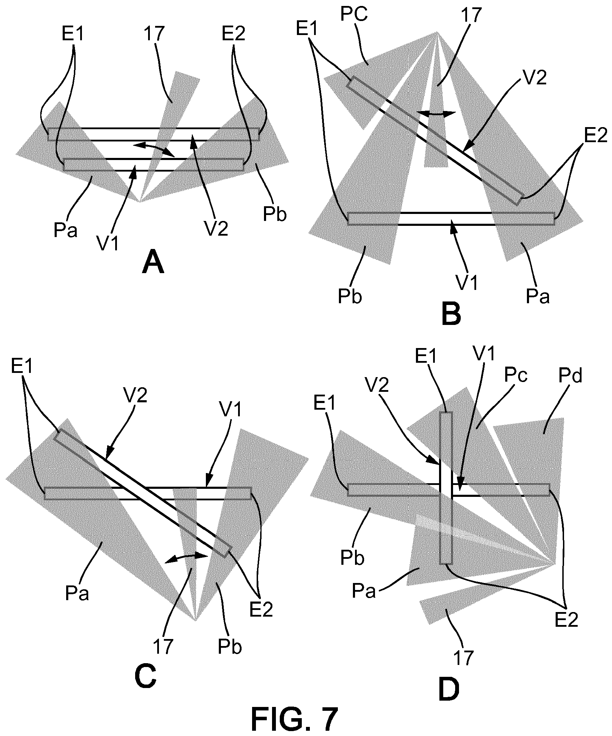

Chaque caméra **16, 18** comprend une ouverture angulaire propre. La caméra secondaire **16** comprend une ouverture angulaire secondaire **17.** Le système **10** comprend au moins deux caméras primaires **18a, 18b.** Ainsi, chaque caméra primaire est référencée **18** suivie d'une référence **a, b, c, d...**désignant respectivement le rang 1 pour premier, 2 pour deuxième, ... de la caméra primaire. La première caméra primaire est donc notée **18a,** la deuxième caméra primaire est notée **18b,** la troisième caméra primaire est notée **18c,** etc... Chaque ouverture angulaire est notée **18x** où **x** est une lettre désignant la caméra primaire **18x.** Chaque caméra primaire **18x** comprend une ouverture angulaire primaire **Px** où x est une lettre désignant l'ouverture angulaire de la caméra **18x.** Ainsi, la première caméra primaire **18a** présente une ouverture primaire **Pa,** la deuxième caméra primaire **18b** présente une ouverture primaire **Pb,** la troisième caméra primaire **18c** présente une ouverture primaire **Pc,** la quatrième caméra primaire **18d** présente une ouverture primaire **Pd,...** Comme cela est visible sur la figure 7, l'ouverture angulaire primaire **Pa, Pb, Pc, Pd** de chacune des caméras primaires **18a, 18b, 18c, 18d** est supérieure à l'ouverture angulaire secondaire **17.**

Le système optronique est adapté à une installation sur tout type d'aérodrome non contrôlé. Il est ainsi adapté à être installé sur des aérodromes non contrôlés présentant une configuration de pistes **V1, V2** telles que représentées sur les figures **7A, 7B, 7C, 7D****.** On comprendra aisément, à la lumière de la description, que l'invention est applicable à tout type d'aérodrome comprenant une ou plusieurs pistes. La configuration 2D des pistes, c'est-à-dire le nombre de pistes ainsi que l'agencement en deux dimensions des axes des pistes les uns par rapport aux autres détermine le nombre de caméras primaires **18** nécessaire et le positionnement des caméras primaires **18.** En pratique, lorsque l'aérodrome comprend plus de deux pistes, on préférera utiliser plus d'un système optronique. Dans une telle situation, un système optronique comprendra avantageusement quatre caméras primaires lesquelles sont utilisées pour surveiller les extrémités de deux pistes et un autre dispositif optronique sera utilisé pour surveiller les extrémités des pistes au-delà desdites deux pistes.

Dans la configuration illustrée sur les figures, les caméras primaires **18** sont positionnées autour de l'axe longitudinal **L** et sont de préférence agencées sur un cercle ayant un centre situé sur l'axe longitudinal **L** du mât **14.** Dit autrement, le cercle intercepte chaque caméra primaire **18.** Pour autant, cela ne signifie pas que chaque caméra primaire **18** est positionnée dans l'espace de la même manière relativement à ce cercle.

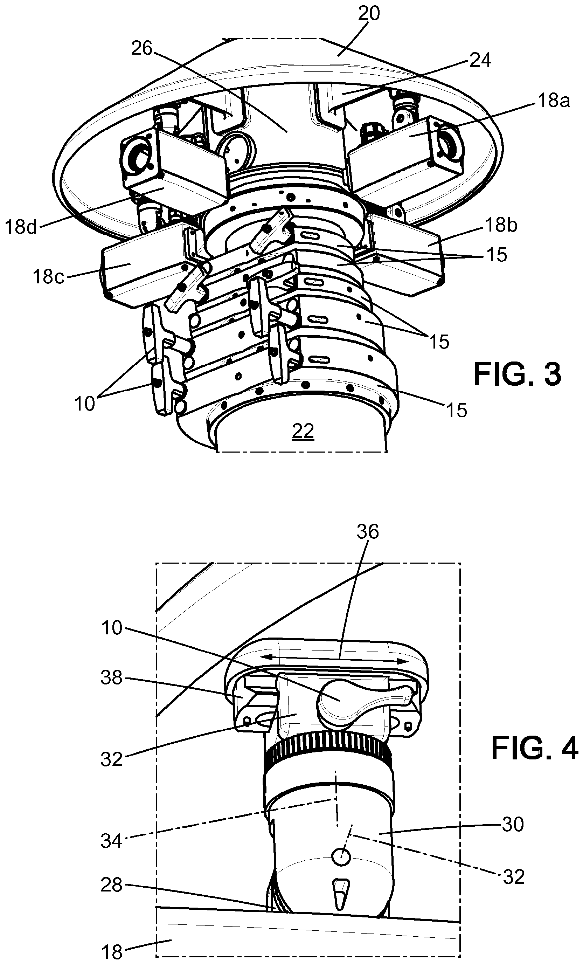

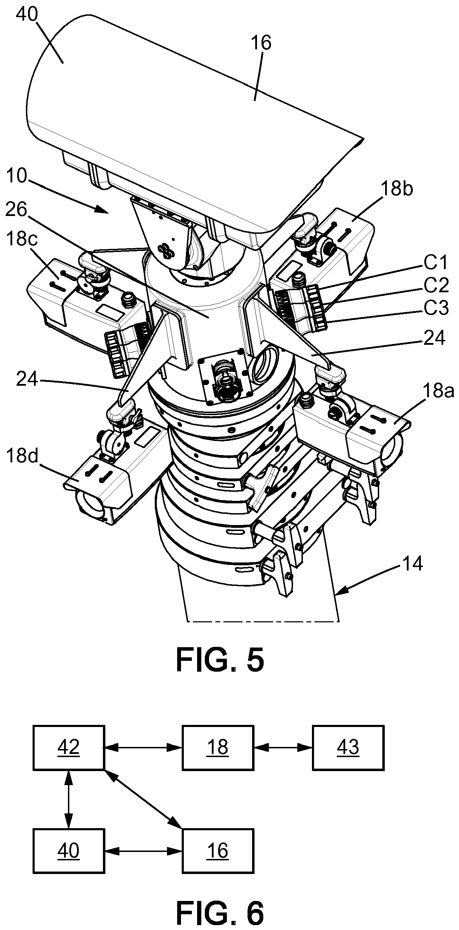

La caméra secondaire **16** est portée par la seconde extrémité **14b** du mât **14.** Dans une réalisation, l'axe optique de la caméra est intercepté par l'axe longitudinal du mât **14.** On observe qu'une paroi de protection **20** peut être intercalée entre les caméras primaires **18** et la caméra secondaire **16** (figures 2 et 3). Sur la figure 5, la paroi de protection **20** a été retirée pour faciliter la visualisation des pièces situées sous celle-ci. La paroi de protection **20** peut présenter une forme tronconique, la section de la paroi **20** présentant de préférence une section se réduisant vers la caméra secondaire **16.**

Chaque caméra primaire **18** peut être montée sur des moyens de support comportant des moyens de déplacement de l'axe optique de la caméra primaire suivant au moins l'une de l'orientation azimutale, de l'orientation en élévation et d'une translation relativement à une direction radiale par rapport à l'axe longitudinal L.

Les moyens de déplacement peuvent être à des moteurs illustrés en **22** et qui peuvent être agencés à l'intérieur du mât **14** de manière à les protéger.

Les moyens de déplacement de chaque caméra primaire **18** sont portés par un support **24** comportant une platine ayant une forme sensiblement triangulaire. Une extrémité de la platine **24** est solidaire d'un anneau **26** porté par le mât et une autre extrémité porte les moyens de déplacement de l'axe optique d'une caméra primaire **18** (figure 5). Les moyens de déplacement d'une caméra primaire **18** comprennent des moyens de déplacement en élévation, des moyens de déplacement azimutal et des moyens de déplacement en translation relativement à l'axe longitudinal **L** (figure 4).

Les moyens de déplacement en élévation comprennent une chape **28** solidaire de la caméra primaire **18** et un bras **30** articulé en rotation sur la chape **28.** L'articulation est réalisée suivant un axe horizontal **32,** c'est-à-dire un axe perpendiculaire à l'axe longitudinal et positionné de manière à permettre un réglage de l'orientation de l'axe de la caméra primaire **18** par rapport à un plan horizontal.

Les moyens de déplacement en azimutal comprennent le bras **30** qui est monté en rotation sur un organe **32** autour d'un axe vertical **34** parallèle à l'axe longitudinal **L.**

Les moyens de déplacement en translation comprennent l'organe **32** et un rail **38,** l'organe **32** étant apte à se déplacer suivant un axe **36.** Le rail peut être un rail du type rail Picattiny^{®}.

Les moyens de déplacement sont reliés à des moteurs agencés à l'intérieur du mât **14.**

Comme cela est visible sur la figure 5, l'anneau **26** comprend des connecteurs, de préférence une pluralité de triplets connecteurs **C1, C2, C3,** chaque triplet étant associé à une caméra primaire **18.** Deux connecteurs **C1, C2** sont prévus pour le transfert des signaux vidéo et un connecteur **C3** est prévu pour l'alimentation électrique d'une caméra primaire **18.** Ces connecteurs permettent de relier les câbles vidéo et électrique d'une caméra primaire **18** à un support statique du mât **14.**

Selon la présente divulgation, le système **10** peut comprendre des moyens de déplacement **40** notamment en rotation de la caméra secondaire **16** autour de l'axe longitudinal **L** de manière à déplacer un axe optique de la caméra secondaire **16** sur une distance angulaire prédéterminée **D** pour réaliser un suivi dynamique d'un aéronef en phase d'atterrissage ou de décollage, et des moyens de pilotage **42** des moyens de déplacement **40.** Les moyens de pilotage **42** sont reliés à des moyens de reconnaissance et de suivi **43** d'un aéronef dans une ouverture primaire **Px.** Ainsi, les moyens de pilotage **42** en communication/liaison avec les moyens de reconnaissance et de suivi **43** sont renseignés sur le positionnement d'un aéronef dans une ouverture angulaire primaire statique **Px** et permettent d'actionner les moyens de déplacement **42** pour réaliser un suivi en déplacement de l'aéronef dans l'ouverture angulaire secondaire **17** - se déplaçant en rotation avec la caméra secondaire **16** - pour permettre une identification de l'aéronef. Les moyens de déplacement 40 de la caméra secondaire 16 peuvent également comprendre des moyens de déplacement en élévation de l'axe optique de la caméra secondaire 16.

Les moyens de pilotage **42** reçoivent donc une information de détection positive d'un aéronef. Cette détection est réalisée en continu à partir des images acquises en temps réel par chacune des caméras primaires **18.** L'analyse des images des caméras primaires **18** est réalisée en temps et la détection peut donc être réalisée en temps réel. La figure 6 illustre un logigramme d'interaction entre la caméra secondaire **16** reliée aux moyens de déplacement **40** lesquels sont commandés par les moyens de pilotage **42** qui reçoivent des informations de détection positive d'un aéronef détecté dans une ouverture primaire **Px** d'une caméra primaire **18.** Chaque seconde caméra est reliée à des moyens de reconnaissance et de suivi **43** d'un aéronef dans l'ouverture angulaire primaire d'une caméra primaire.

Les moyens d'identification d'un aéronef sont des moyens permettant d'identifier l'aéronef, c'est-à-dire des moyens permettant de reconnaitre les caractères d'une plaque d'immatriculation située sur l'aéronef. Les moyens de reconnaissance et de suivi **43** désignent des moyens permettant d'identifier la présence d'un avion dans le champ visuel d'une caméra primaire **16** et de le suivre dans le champ angulaire **Px.**

La caméra secondaire **16** peut être une caméra SCMOS SONY^{®}- 4K 200-600mm, 12° - 4° ayant un zoom optique continu x3 s'étendant entre 200 to 600 mm. Elle peut avoir une capacité bas niveau de lumière 3 (ISO > 400.000). Chaque caméra primaire **18** peut être une caméra CMOS SONY^{®}- 4K FCB-ER8550, 4,4-88 mm, 60° - 3,5° et ayant un zoom optique continu x20 entre 4,4 et 88 mm.

On se réfère maintenant à la figure 7 qui représente différentes configurations de pistes. En figure 7A, la configuration est telle que deux pistes **V1, V2** sont parallèles l'une de l'autre. En figure 7B, la configuration est telle que deux pistes **V1, V2** forment un angle non nul l'une par rapport à l'autre et ne s'interceptent pas, les pistes **V1, V2** formant un angle inférieur à 90° et en l'espèce d'environ 40°. En figure 7C, la configuration est telle que deux pistes **V1, V2** s'interceptent l'une avec l'autre avec un angle inférieur à 90°, en l'espèce de l'ordre de 30°. En figure 7D, les pistes **V1, V2** sont perpendiculaires l'une à l'autre et s'interceptent et dans le cas d'espèce sensiblement en leur milieu.

Dans les différentes configurations illustrées, les ouvertures angulaires primaires **Px** des caméras primaires **18** sont toutes identiques. Elles pourraient encore être différentes. Chaque piste **V1, V2** comprend une première extrémité **E1** et une seconde extrémité **E2.** Un aéronef peut décoller et atterrir depuis une extrémité **E1** ou **E2** de chaque piste, en fonction du sens du vent.

Pour chaque configuration 2D des pistes d'un aérodrome (figures 7A, 7B, 7C, 7D), il convient de déterminer le nombre de caméras primaires **18** nécessaire et le positionnement des caméras primaires **18.** Dans chaque configuration, chaque piste est agencée ou couverte par l'ouverture angulaire d'une caméra primaire **18.** Une caméra primaire donnée peut ainsi couvrir plusieurs extrémités **E1, E2** de pistes **V1, V2.**

Dans la configuration de la figure 7A, la première ouverture angulaire primaire **Pa** d'une première caméra primaire **18a** couvre les deux extrémités **E1** des deux pistes **V1, V2** tandis que la seconde ouverture angulaire primaire Pb de la deuxième caméra primaire **18b** couvre les deux extrémités **E2** des deux pistes **V1, V2.** Ainsi, dans une configuration de pistes parallèles, seules deux caméras primaires **18** sont nécessaires.

Dans la configuration de la figure 7B, on observe qu'il est nécessaire de disposer de trois caméras primaires 18, la première ouverture angulaire primaire **Pa** d'une première caméra primaire **18a** couvre les deux extrémités **E2** des deux pistes **V1, V2** tandis que la seconde ouverture angulaire primaire Pb de la deuxième caméra primaire **18b** couvre une extrémité E1 de la piste **V1** et que la troisième ouverture angulaire primaire **Pc** de la troisième caméra primaire **18c** couvre une extrémité **E1** de la piste **V2.**

Dans la configuration de la figure 7C, on observe que deux caméras primaires **18** sont nécessaires. La première ouverture angulaire primaire **Pa** d'une première caméra primaire **18a** couvre les deux extrémités **E1** des deux pistes **V1, V2** tandis que la seconde ouverture angulaire primaire **Pb** de la deuxième caméra primaire **18b** couvre les deux extrémités **E2** des deux pistes **V1, V2.**

Dans la configuration de la figure 7D, on observe qu'il est nécessaire de disposer de quatre caméras primaires **18.** Dans cette configuration, chaque ouverture angulaire primaire d'une caméra primaire couvre une seule extrémité **E1, E2** d'une piste **V1, V2.**

Dans les configurations représentées en figure 7, une caméra secondaire **16** est utilisée pour réaliser le suivi d'un aéronef depuis l'extrémité **E1, E2** où il a été détecté. Par exemple, lorsque l'aéronef est détecté en phase d'atterrissage/décollage dans l'une des images d'une caméra primaire **18,** la caméra secondaire **16** effectue le suivi de l'aéronef en cours d'atterrissage/décollage sur la piste concernée **V1, V2.**

A chaque piste **V1, V2** est associée une caméra primaire **18** pour la détection d'un aéronef en phase de décollage/atterrissage à chacune de ses extrémités **E1, E2.** A chaque position d'une ouverture angulaire primaire **Px** d'une caméra primaire **18** est associée une première position de début de suivi pour la phase de décollage/atterrissage pour la caméra secondaire 16. Cette première position de début de suivi est telle que l'ouverture angulaire secondaire **17** de la caméra secondaire **16** intercepte au moins partiellement l'ouverture angulaire primaire de la caméra primaire **18** réalisant une détection positive. En pratique, il y a autant de première position qu'il y a de caméras primaires **18.** Chaque caméra secondaire est associée à une seconde position de fin de suivi qui peut être fixe pour une configuration de piste. Elle peut encore être fonction d'une identification positive d'un aéronef, conduisant ainsi à stopper le suivi de l'aéronef par la caméra secondaire **16,** laquelle peut par exemple prendre une position d'attente en première position de suivi au niveau d'une piste **V1, V2.**

Dans le présent document, il est présenté un système comprenant une seule caméra secondaire. Toutefois, on comprend bien que la présente divulgation, dans toutes ses caractéristiques, s'applique également à un système comprenant au moins une caméra secondaire et donc pouvant comprendre une seconde caméra secondaire. Une telle caméra secondaire additionnelle pourrait être utilisée en simultanée de la première caméra secondaire pour se positionner dans une première position de suivi ou d'attente tandis que la première caméra réalise un suivi de trajectoire d'un aéronef en train d'atterrir. Cette configuration serait particulièrement intéressante lorsque l'aérodrome comprend un nombre plus important de pistes, par exemple supérieur à deux, ce qui permettrait de gérer un trafic aérien plus important avec le système.

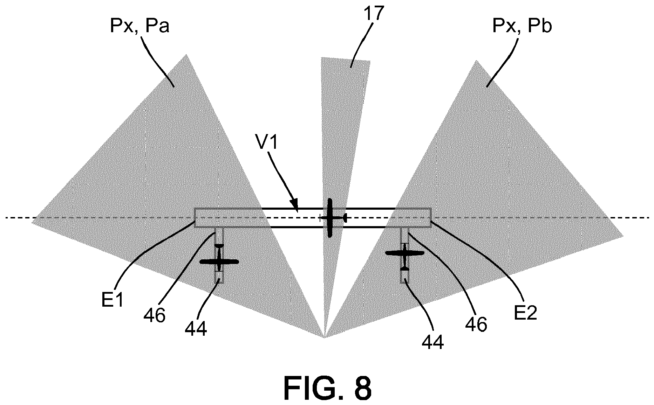

Préférentiellement, l'ouverture angulaire primaire **Px, Pa, Pb** de chaque caméra primaire est configurée pour comprendre une zone **46** de jonction d'une voie de circulation **44** à une piste **V1.** Ainsi, l'ouverture angulaire primaire Px d'une caméra primaire **18** comprend à la fois une extrémité **E1, E2** de la piste V1 et ladite zone de jonction **46,** ce qui permet d'identifier qu'un aéronef entre sur la piste **V1** ou sort de celle-ci (figure 8).

Le positionnement du système optronique autour des pistes est réalisé en fonction de la portée maximum de la caméra secondaire **16.** La lecture se faisant sur le tiers central de chaque piste, le système optronique sera alors placé sur l'intersection de deux disques de rayon égal à la portée maximum de la caméra secondaire **16,** dans le cas d'une configuration à deux pistes. La configuration à deux pistes est la plus courante. D'autres paramètres peuvent être pris en compte tels que le relief (car les pistes ne sont pas toujours plates), les masques (bâtiments, arbres, etc) qui réduisent les possibilités au sein de cette intersection.

Le procédé décrit ci-après dans les figures est destiné à être mis en oeuvre à l'aide d'un système optronique pour la surveillance du trafic aérien, en particulier pour un aérodrome non contrôlé, comprenant au moins une caméra secondaire **16** ayant une ouverture angulaire secondaire **17** et au moins deux caméras primaires **18** statiques ayant une ouverture angulaire primaire **18x** qui est supérieure à l'ouverture angulaire secondaire **17** de la caméra secondaire **16,** lesdites au moins deux caméras primaires étant agencées autour d'un même axe longitudinal sur lequel ladite caméra secondaire est montée mobile en rotation. Au moins deux caméras primaires **18** sont nécessaires pour confirmer la trajectoire d'un aéronef. Le système optronique peut comprendre tout ou partie des caractéristiques du système optronique décrit en référence aux figures 1 à 8. Toutefois, une seule peut être utilisée si l'on souhaite uniquement déterminer le comportement d'un aéronef sans avoir la confirmation de son statut (il a atterri, un touché et est reparti ou bien il a survolé l'aérodrome à basse altitude) comme cela apparaitra ci-après.

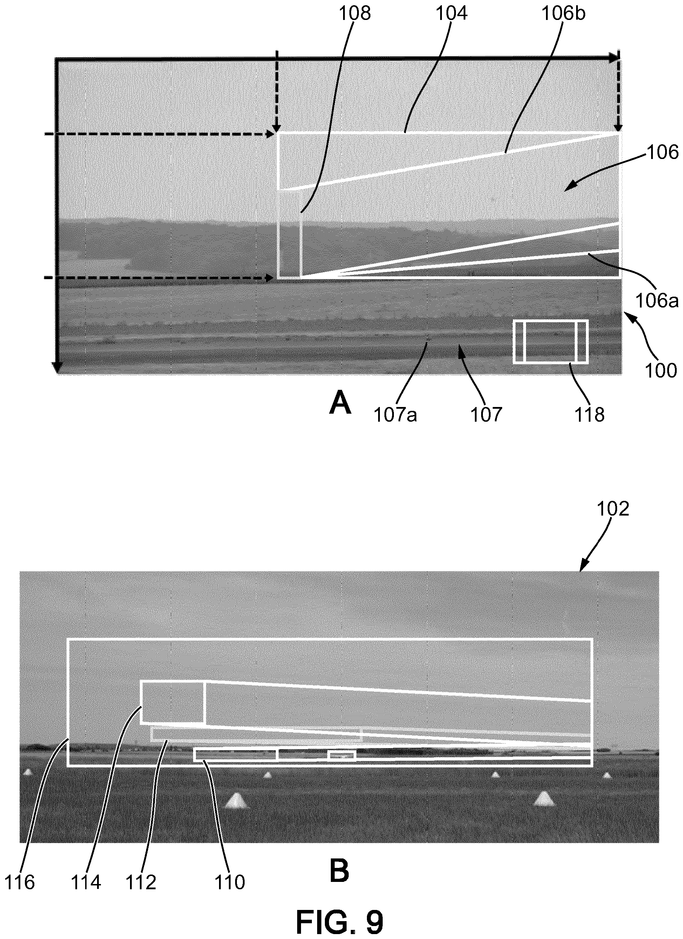

On se réfère maintenant à la figure 9 qui comprend une partie A qui représente une image 100 d'une zone d'espace observée au travers d'une ouverture angulaire primaire d'une première caméra primaire orientée vers une première extrémité d'une piste V1 et qui peut être qualifiée de caméra primaire pour la phase d'approche et la partie B représente une image **102** d'une zone d'espace observée au travers d'une ouverture angulaire d'une seconde caméra primaire orientée vers une seconde extrémité de la piste **V1** et qui peut être qualifié de caméra primaire de sortie de piste.

L'image de la figure 9A comprend plusieurs zones qui sont destinées à servir à la fourniture d'une indication d'approche d'un aéronef sur la piste **V1.** L'image **102** de la figure 9B comprend plusieurs zones qui sont destinées à servir à la confirmation du statut de l'avion passé en phase d'approche dans l'image de la figure 9A.

Comme on peut le voir, la première caméra primaire est orientée de manière à ce que son ouverture angulaire primaire comprenne une première extrémité de la piste V1. La seconde caméra primaire est orientée de manière à ce que son ouverture angulaire primaire comprenne une seconde extrémité de la piste figure 9B.

Sur l'image de la figure 9A, on observe la présence d'un rectangle 104 dont la dimension est inférieure à l'ouverture angulaire primaire de la première caméra. Ce rectangle 104 correspond donc une zone d'analyse c'est-à-dire à une zone dans laquelle les traitements d'images vont être réalisés pour détecter la présence d'objets apparentés à un aéronef.

Cette zone d'analyse **104** correspondant à une partie réduite de l'ouverture angulaire primaire permet de rendre compatibles les traitements numériques avec un objectif d'analyse en temps réel. Ce rectangle **104** comprend une zone d'approche **106** se prolongeant par une région de fin d'approche **108.** La zone d'approche présente la forme d'un couloir délimité inférieurement par une première ligne basse agencée 106a au-dessus de la piste et supérieurement par une seconde ligne haute 106b agencée au-dessus de la première ligne. La région de fin d'approche est agencée à une extrémité de la zone d'approche.

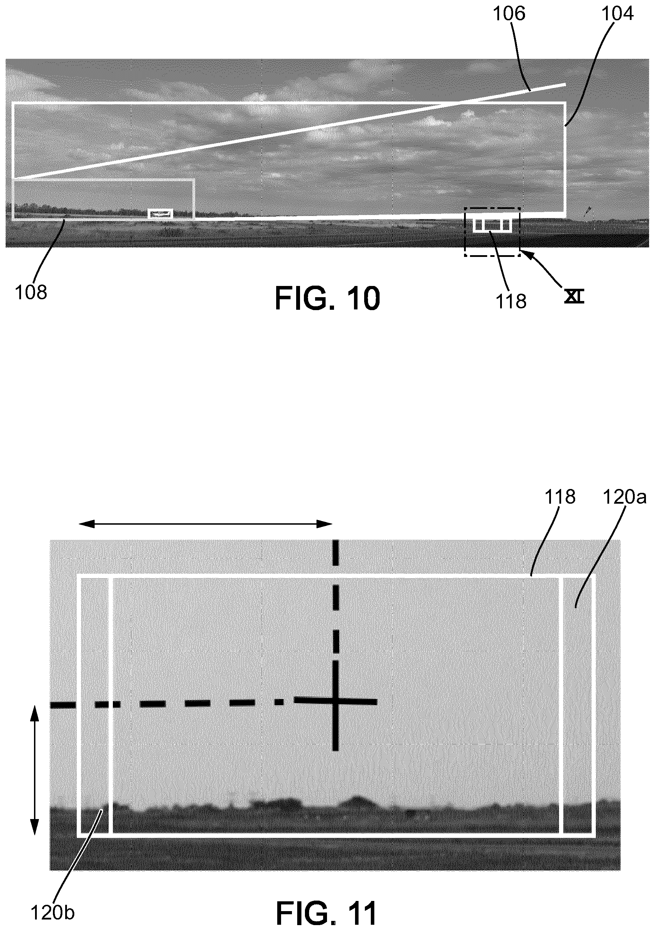

Afin de déterminer le positionnement de la première caméra primaire et plus pratiquement son orientation azimutale, le procédé comprend une étape de détermination d'un ensemble de trajectoires possibles d'approche sur la piste (non visible). Après cette étape, on détermine la position de la caméra primaire de manière à ce que son ouverture angulaire primaire comprenne ledit ensemble de trajectoires possibles. En pratique, l'ouverture angulaire de chaque caméra primaire est déterminée de manière à comprendre également une zone de jonction **107a** d'une voie de circulation **107** avec la piste de manière à pouvoir contrôler les entrées et sorties de piste correspondant à un décollage à venir et à un atterrissage réalisé. La voie de circulation comprend une zone **118** formée sur une voie de circulation reliée à la piste. Cette zone sera mieux décrite en relation avec la figure 11.

La zone d'analyse 104 est positionnée de manière à être située au-dessus de l'horizon, de préférence rasante, et à comprendre l'ensemble desdites trajectoires d'approche pour éviter de comprendre des objets se déplaçant au sol tels que les arbres qui subissent des mouvements réguliers.

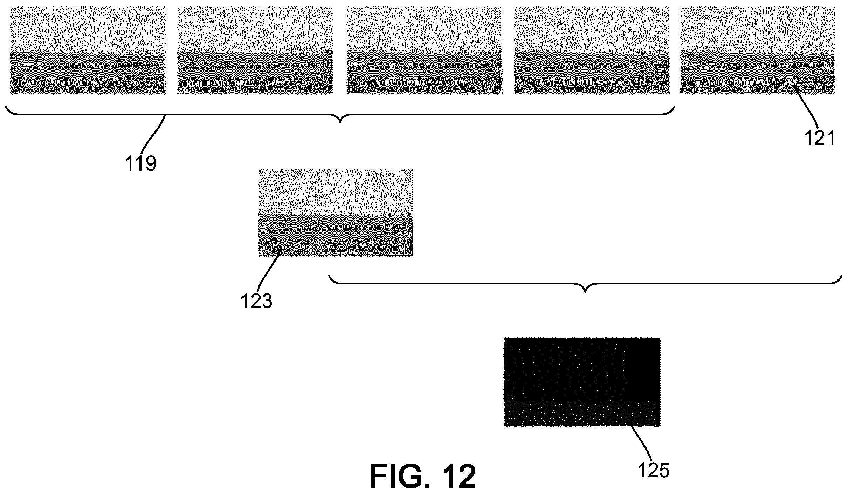

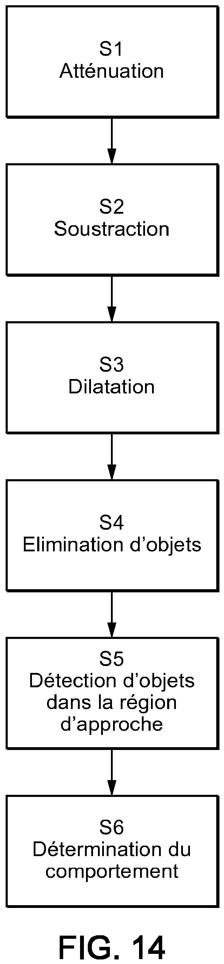

Ainsi, à chaque zone d'approche **106** est associée une région de fin d'approche 108 qui est située dans la zone d'approche **106.** Cette région **108** de fin d'approche correspond à la zone dans laquelle la détection d'un objet ayant une taille compatible avec celle d'un aéronef, déclenche la mise en oeuvre d'une étape de confirmation que l'objet volant identifié correspond à un aéronef. Préalablement à la mise en oeuvre de l'étape de confirmation, les objets volants compatibles avec une taille d'aéronef sont suivis en temps réel dans la zone d'approche. Le suivi en temps réel sera expliqué ci-après en référence aux figures 12 à 14.

Le procédé selon le présent document comprend de préférence également les étapes de :
- Identification des trajectoires possibles de sortie de piste d'un aéronef en seconde extrémité de piste ; ces trajectoires de sortie de piste correspondent à toutes les trajectoires possibles après passage de l'aéronef au niveau d'une première extrémité de la piste, le passage au niveau d'une partie médiane de ladite piste. On comprend qu'il n'existe pas de bijection entre une trajectoire d'approche et un comportement donné de l'aéronef. Dit autrement, un aéronef ayant une trajectoire d'approche donnée peut tout à fait correspondre à l'une des trois possibilités de trajectoires de sortie de piste évoquées précédemment, à savoir l'aéronef a atterri, l'aéronef a effectué un touché et est reparti et l'aéronef a survolé la piste à basse altitude ;
- classification desdites trajectoires possibles en trois comportements possibles, un premier comportement correspondant à un atterrissage réel, un second comportement correspondant à un touché de piste sans atterrissage et le troisième comportement correspondant à un survol de la piste à basse altitude,
- Détermination d'une position de la seconde caméra primaire de manière à ce que son ouverture angulaire primaire comprenne toutes les trajectoires possibles de sortie de piste,
- Détermination, dans l'ouverture angulaire primaire de la seconde caméra, de trois zones, une première zone **110** de bout de piste correspondant au premier comportement, une seconde **112** de bout de piste correspondant au deuxième comportement et une troisième zone **114** de bout de piste correspondant au troisième comportement (figure 9B).

On observe la présence d'une grande zone **116** englobant lesdites trois zones 110, 112, 114, cette zone correspond à celle sur laquelle l'analyse de traitement d'images en temps réel est réalisée (voir figures 12 à 14).

Ainsi, pour chaque caméra primaire, il existe un premier ensemble de zones et région d'approche pour la phase d'approche et un second ensemble de zones pour la confirmation du statut de l'avion après être passé en phase d'approche. Cela est rendu nécessaire puisque chaque extrémité de piste peut servir au décollage et à l'atterrissage en fonction de l'orientation dominante du vent par rapport à la piste. L'ouverture angulaire d'une caméra primaire doit être telle que la caméra primaire doit pouvoir fonctionner en caméra primaire de détection d'une approche ou en caméra primaire de confirmation du statut d'un aéronef.

La figure 10 illustre une autre configuration de piste et qui comprend les mêmes zones que celles décrites en figure 9A. Toutefois, on comprend bien que la forme de chacune des zones est différente puisqu'elle est à chaque fois fonction de la configuration tridimensionnelle des pistes de l'aérodrome concerné.

La figure 11 illustre une zone **118** formée sur une voie de circulation reliée à la piste. Cette zone **118** peut être placée à l'intersection de la voie de circulation et de la piste ou bien être positionnée sur la voie comme c'est le cas ici. On observe que cette zone comprend deux régions d'extrémité longitudinale **120a, 120b** permettant de déterminer le passage d'un aéronef dans un sens ou dans l'autre. Selon que l'aéronef passe dans la zone **120a** ou dans la zone **120b** en premier et passe ensuite dans l'autre zone, on comprend qu'il est possible de détecter le sens de circulation de l'aéronef et ensuite de vérifier que celui-ci circule dans le bon sens tel que prescrit par les règles en vigueur.

Pour chaque image obtenue par l'une et l'autre des caméras primaires on effectue le traitement suivant. En pratique, le procédé de détection d'un aéronef est mis en oeuvre à partir des images de toutes les caméras primaires **18.** De cette manière, les détections d'atterrissage sont réalisées, quel que soit le sens d'atterrissage, ce qui est particulièrement vrai lorsque le vent est faible où le choix du sens d'atterrissage appartient au pilote. La caméra primaire **18** détectant en premier un aéronef en phase d'approche donnant ensuite l'indication à la caméra secondaire **16** de l'endroit où elle doit se positionner.

En premier lieu, chaque image acquise par une caméra primaire subit un traitement par un filtre d'atténuation **S1,** tel que par exemple un flou gaussien, ce qui permet d'uniformiser l'image. Cette première étape permet d'éliminer les petits objets de l'image qui sont donc ici considérés comme du bruit. On veillera toutefois à ce que le filtre d'atténuation appliqué soit suffisamment faible pour ne pas affecter la résolution de détection des aéronefs. Pour cela, un ajustement empirique est possible sur les images acquises par chaque caméra primaire dans sa position souhaitée par rapport à une extrémité de la piste.

Dans une étape **S2,** pour une image donnée **121** à un instant donnée t :
- réaliser la moyenne de x images **119** précédents temporellement l'image donnée et obtenir une image moyennée **123**
- Soustraire l'image donnée à l'image moyennée et obtenir une image résultante 125.

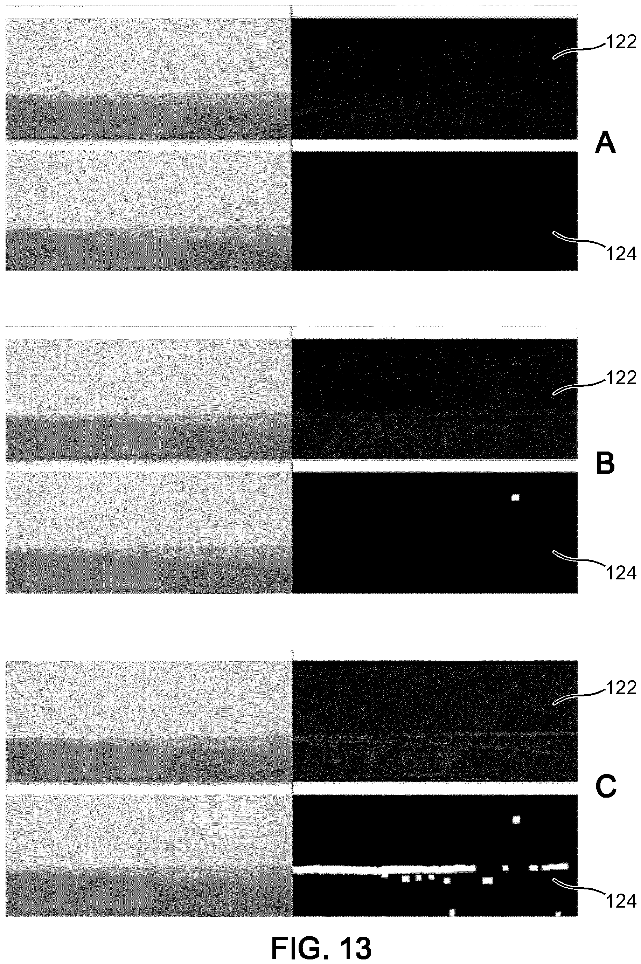

L'image résultante comprend ainsi uniquement les parties ayant subi un déplacement par rapport à la moyenne des images précédentes **123** (figure 12). Seules les parties de l'image supérieure à une valeur seuil sont conservées. Ces parties correspondent donc à des parties qui se sont déplacées. On comprend que plus le nombre x d'images prises en compte est important plus l'image résultante comprendra de zones supérieures à la valeur seuil. Ce principe est illustré sur la figure 13 qui montre trois cas A, B et C comprenant chacun deux images, une première image **122** correspond à l'image résultante et une seconde image 124 correspondant à l'image résultante après application du seuil. Sur le cas A, le nombre d'images x prises en compte est de 10, sur le cas B, le x est égal à 100 et sur le cas C x est égal à 1000.

Chaque image de sortie en noir et blanc subit une étape de fermeture **S3** des contours qui peut avantageusement être réalisée par dilatation de contours. Cette fonction mathématique est bien connue de l'homme du métier et ne sera pas décrite plus en détail. La dilatation doit être réalisée de manière suffisante pour éviter d'augmenter de manière trop importante la taille de l'objet. Une itération pourra être réalisée.

Dans une étape S4, on élimine les objets ayant une taille incompatible avec un aéronef. On comprend que le critère de taille ne permet pas de distinguer un volatile pris dans le champ d'une caméra primaire à une distance telle que sa taille devient compatible avec la taille d'un aéronef situé à une plus grande distance de la caméra primaire.

Le traitement réalisé au travers des étapes **S1** à **S4** pourrait être effectué sur toutes les images acquises par la caméra primaire. Toutefois, cela conduirait à un stockage d'un nombre important de données. À cette fin, les étapes **S1** à **S4** sont réalisées sur une image sur k, k pouvant prendre une valeur de 3 par exemple. Les images **Im-S4** obtenues à l'issue de l'étape **S4** sont stockées en base de données et conservées pour réaliser l'étape S5. Évidemment, il n'est pas nécessaire de conserver toutes les images **Im-S4.** En pratique, on stocke N images **Im-S4,** le choix de N étant réalisé pour pouvoir conserver suffisamment d'historique. Ainsi, on pourra conserver un nombre d'images **Im-S4** d'au moins 4 lorsque la caméra primaire a un taux d'acquisition de 25 images par seconde.

Dans une étape **S5,** on réalise une détection d'objets dans la région d'approche de l'image **Im-S4.** Ainsi, à chaque traitement **S1-S4** est associé un traitement de fin consistant à vérifier la présence ou non d'un objet compatible avec un aéronef dans la zone d'approche **108.**

En cas de détection positive d'un objet dans la région d'approche **108,** il convient de déterminer si l'objet détecté est ou non un aéronef.

Pour cela dans une étape **S6,** on fournit une indication qu'un aéronef est en phase d'approche. Cette étape **S6** permet de réaliser la distinction entre les objets de type aéronef et les autres objets. La vérification des conditions suivantes permet de s'assurer qu'un aéronef est bien en phase d'approche pour atterrir :
a) Au moins un objet a été identifié dans une région d'approche de la dernière image **Im-S4ₐ** obtenue,
b) Au moins un objet a été détecté dans la zone d'approche et sur au moins k images **Im-S4ᵢ** (i variant de 1 à k) précédant temporellement l'image **Im-S4ₐ** pour laquelle un objet a été détecté dans la région de fin d'approche, k étant inférieur ou égal à N. k est un entier naturel supérieur ou égal à 1 et peut être égal à 3.
c) il existe au moins k images lm-S4i comprenant au moins un objet de taille compatible avec celle d'un aéronef et l'abscisse de chacun des objets est supérieure (ou inférieure selon que l'objet supposé être un aéronef, arrive vers une extrémité ou l'autre de la piste **V1**) à l'abscisse de l'objet détecté dans la région de fin d'approche,
   ∘ cette condition permet de s'assurer que l'objet suit bien une progression continue de la gauche vers la droite ou de la droite vers la gauche. L'origine de l'abscisse est déterminée à une extrémité de la piste.
d) déterminer tous les trajets possibles entre les objets des images **Im-S4ᵢ** successives (i variant de 1 à k) et aboutissant à l'objet identifié sur l'image **Im-S4ₐ,** puis on détermine si la trajectoire suit sensiblement ou non une ligne droite. Cette dernière étape peut être réalisée en déterminant un coefficient de corrélation r² qui devrait être supérieur à 0,9 de préférence.

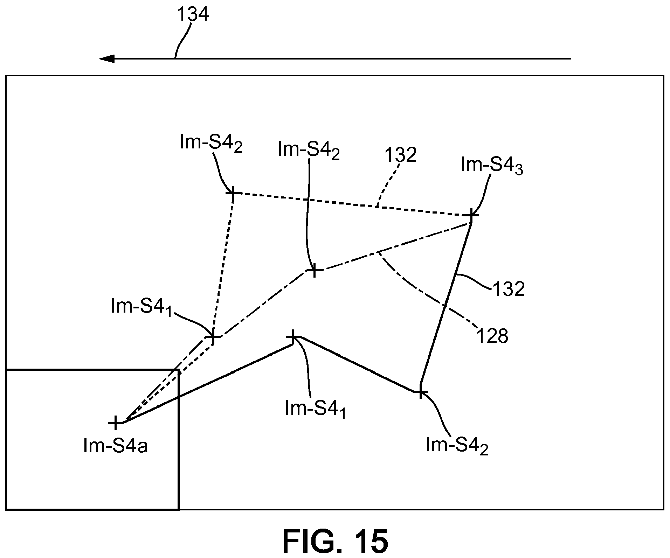

La figure 15 illustre les objets détectés sur les images **Im-S4ᵢ** et les différents trajets possibles. On observe que les étapes a) à c) sont vérifiées et l'étape d n'est vérifiée que pour le trajet **128,** les trajets **132** n'étant pas suffisamment linéaires. La figure 15 illustre également le sens d'approche de l'aéronef avec la flèche **134.**

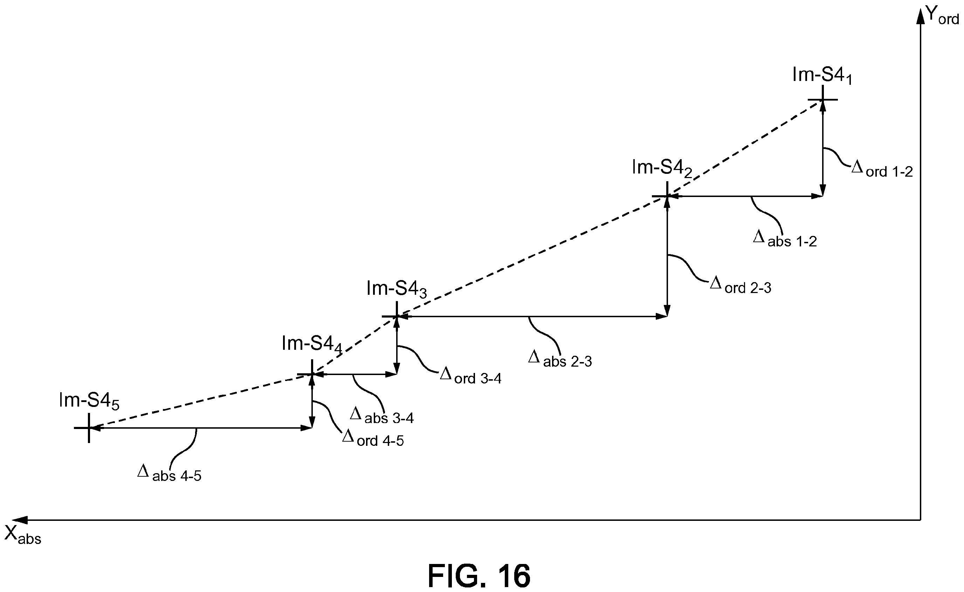

Il est maintenant fait référence à la figure 16 qui illustre un trajet d'atterrissage possible à partir d'images Im-S4_{q}, avec q variant de 1 à p, et p un entier naturel compris entre 2 et k.

Dans cet exemple particulier : p est égal à 5, et q varie donc de 1 à 5. L'axe des abscisses X_{abs} présente un sens allant de gauche à droite selon le plan de la feuille. L'axe des abscisses Y_{ord} présente un sens allant de bas en haut selon le plan de la feuille.

Des différences d'abscisses Δ_{abs} et d'ordonnées Δ_{ord} sont mesurées entre deux images successives parmi les 5 images Im-S4_{q} :
- Δ_{abs 1-2} correspond à la différence d'abscisse entre Im-S4₂ et Im-S4₁, Δ_{ord 1-2} correspond à la différence d'ordonnée entre Im-S4₂ et Im-S4₁;
- Δ_{abs 2-3} correspond à la différence d'abscisse entre Im-S4₃ et Im-S4₂, Δ_{ord 2-3} correspond à la différence d'ordonnée entre Im-S4₃ et Im-S4₂;
- Δ_{abs 3-4} correspond à la différence d'abscisse entre Im-S4₄ et Im-S4₃, Δ_{ord 3-4} correspond à la différence d'ordonnée entre Im-S4₄ et Im-S4₃; et
- Δ_{abs 4-5} correspond à la différence d'abscisse entre Im-S4₅ et Im-S4₄, Δ_{ord 4-5} correspond à la différence d'ordonnée entre Im-S4₅ et Im-S4₄.

L'indication qu'un aéronef est en phase d'approche est réalisée en vérifiant que les Δ_{abs} (i.e. Δ_{abs 1-,} Δ_{abs 2-3}, Δ_{abs 3-4} et Δ_{abs 4-5}) sont positives, et en vérifiant que les Δ_{ord} (i.e. Δ_{ord 1-}, Δ_{ord 2-3}, Δ_{ord 3-4} et Δ_{ord 4-5}) sont négatives, ce qui est le cas dans la trajectoire illustrée.

Il est également possible de vérifier que l'objet des images Im-S4_{q} est bien un aéronef en phase d'atterrissage en vérifiant en outre que les Δ_{abs} sont compris entre une valeur minimale Δ_{abs min} et une valeur maximale Δ_{abs max}. Autrement dit, il est possible de vérifier que Δ_{abs 1-}, Δ_{abs 2-3}, Δ_{abs 3-4} et Δ_{abs 4-5} sont compris dans une plage ayant pour bornes Δ_{abs min} et Δ_{abs max}.

Similairement, il est aussi possible de vérifier que les Δ_{ord} sont compris entre une valeur minimale Δ_{ord min} et une valeur maximale Δ_{ord max}.

Un critère de détermination/vérification supplémentaire est l'exploitation des écarts types.

Dans cet exemple particulier, on calcule les écarts types des différences d'abscisses σ_{abs} et les écarts types des différences d'ordonnées σ_{ord}.

Puis, la détermination qu'un aéronef est en phase d'approche est réalisée en comparant σ_{abs} et σ_{ord} avec des écarts types seuils d'abscisse σ_{seuil_abs} et d'ordonnée σ_{seuil_ord}.

Plus spécifiquement, on vérifie que σ_{abs} ≤ σ_{seuil_abs} , et que σ_{ord} ≤ σ_{seuil_ord}.

## Revendications

1. Procédé de détection d'un aéronef en phase d'atterrissage ou de décollage sur un aérodrome, en particulier non contrôlé, l'aérodrome comprenant au moins une piste (V1) comportant au moins deux extrémités (E1, E2), et au moyen d'un système optronique comportant au moins une caméra primaire (18, 18a, 18b, 18c, 18d) dont une ouverture angulaire primaire (Pa, Pb, Pc, Pd) est orientée vers une première extrémité (E1) de la piste (V1), le procédé comprenant les étapes :
- Détermination d'un ensemble de trajectoires possibles d'approche ou d'éloignement sur ladite au moins une piste (V1),
- Détermination d'une position de ladite au moins une caméra primaire (18, 18a, 18b, 18c, 18d) de manière à ce que son ouverture angulaire primaire (Pa, Pb, Pc, Pd) comprenne ledit ensemble de trajectoires possibles,
- Détermination, dans l'ouverture angulaire primaire (Pa, Pb, Pc, Pd), d'une zone d'analyse (104) conformée de manière à comprendre l'ensemble desdites trajectoires d'approche ou d'éloignement et de préférence située au-dessus de l'horizon ;
- Détermination d'une région de fin d'approche (108) ou de fin d'éloignement dans la zone d'analyse (104);
- Réalisation, dans ladite zone d'analyse (104), d'une détection d'objets ayant une taille compatible avec celle d'un aéronef,
- Détermination de la présence ou non, dans la région de fin d'approche (108) ou de fin d'éloignement, d'un objet compatible avec un aéronef, et le cas échéant analyse du trajet de l'objet détecté par comparaison de sa position actuelle avec un historique des positions d'objets détectés dans la zone d'analyse (104) et compris en base de données.

2. Procédé selon l'une des revendications précédentes, dans lequel la zone d'analyse (104) comprend une zone d'approche (106) ou d'éloignement délimitée inférieurement par une première ligne basse (106a) agencée au-dessus de la piste et supérieurement par une seconde ligne haute (106b) agencée au-dessus de la première ligne basse, la zone d'approche (106) ou d'éloignement étant reliée à la région de fin d'approche (108) ou de fin d'éloignement, dans lequel l'indication qu'un aéronef est en phase d'approche ou d'éloignement est réalisée en vérifiant que :
a) Au moins un objet a été détecté dans la zone d'approche (106) ou d'éloignement et sur au moins k images lm-S4i, i variant de 1 à k, k étant un entier naturel supérieur ou égal à 1, lesdites au moins k images lm-S4i précédant temporellement l'image Im-S4ₐ pour laquelle un objet a été détecté dans la région de fin d'approche (108) ou de fin d'éloignement,
b) il existe au moins k images lm-S4i comprenant au moins un objet de taille compatible avec celle d'un aéronef et l'abscisse de chacun des objets est supérieure, ou inférieure selon que l'objet supposé être un aéronef, arrive vers une extrémité ou l'autre de la piste (V1), à l'abscisse de l'objet détecté dans la région de fin d'approche (108) ou de fin d'éloignement,
(c) déterminer tous les trajets possibles entre les objets des images lm-S4i successives, i variant de 1 à k, et aboutissant à l'objet identifié sur l'image Im-S4ₐ, puis on valide qu'une trajectoire suit sensiblement ou non une ligne droite.

3. Procédé selon la revendication précédente, dans lequel un entier naturel p est compris entre 2 et k, et l'indication qu'un aéronef est en phase d'approche ou d'éloignement est réalisée en effectuant en outre les étapes suivantes :
- calcul, par exemple en pixels, des différences d'abscisses Δ_{abs} et/ou des différences d'ordonnées Δ_{ord} dudit au moins un objet entre deux images successives parmi les p images Im-S4_{q}, q variant de 1 à p, et
- détermination du signe des Δ_{abs} et/ou des Δ_{ord}.

4. Procédé selon la revendication précédente, dans lequel l'indication qu'un aéronef est en phase d'approche ou d'éloignement est réalisée en effectuant en outre l'étape suivante :
- Détermination qu'un aéronef est en phase d'approche ou d'éloignement par comparaison des Δ_{abs} et/ou des Δ_{ord} avec une valeur minimale et/ou maximale prédéterminée à partir d'un historique de différences d'abscisses et différences d'ordonnées compris en base de données.

5. Procédé selon la revendication précédente, dans lequel l'indication qu'un aéronef est en phase d'approche ou d'éloignement est réalisée en effectuant en outre les étapes suivantes :
- Calcul de l'écart type des différences d'abscisses σ_{abs} et/ou de l'écart type des différences d'ordonnées σ_{ord}, et
- Détermination qu'un aéronef est en phase d'approche ou d'éloignement par comparaison de σ_{abs} et/ou σ_{ord} avec un écart type seuil d'abscisse σ_{seuil_abs} et/ou un écart type seuil d'ordonnée σ_{seuil_ord} respectivement, σ_{seuil_abs} et σ_{seuil_ord} étant prédéterminés à partir de l'historique de différences d'abscisses et différences d'ordonnées.

6. Procédé selon l'une des revendications précédentes, dans lequel le système optronique comprend au moins une seconde caméra primaire (18a, 18b, 18c, 18d) dont une ouverture angulaire primaire (Pa, Pb, Pc, Pd) est orientée vers une seconde extrémité (E2) de la piste, le procédé comprenant :
- l'identification des trajectoires possibles de sortie de piste d'un aéronef en seconde extrémité (E2) de piste ;
- la classification desdites trajectoires possibles en trois comportements possibles, un premier comportement correspondant à un atterrissage réel, un second comportement correspondant à un touché de piste sans atterrissage et le troisième comportement correspondant à un survol de la piste à basse altitude,
- Détermination d'une position de la seconde caméra primaire de manière à ce que son ouverture angulaire primaire comprenne toutes les trajectoires possibles de sortie de piste,
- Détermination, dans l'ouverture angulaire primaire (Pa, Pb, Pc, Pd) de la seconde caméra primaire (18a, 18b, 18c, 18d), de trois zones, une première zone de bout de piste correspondant au premier comportement, une seconde de bout de piste correspondant au deuxième comportement et une troisième zone de bout de piste correspondant au troisième comportement.

7. Procédé selon l'une des revendications précédentes, dans lequel il comprend :
- Un enregistrement en continu de l'ouverture angulaire de la caméra primaire (18, 18a, 18b, 18c, 18d),
- Pour une image donnée à un instant donné t :
o réaliser la moyenne de x images précédents temporellement l'image donnée et obtenir une image moyennée,
o Soustraire l'image donnée à l'image moyennée.

8. Procédé selon la revendication précédente, dans lequel une étape de dilatation est appliquée à l'image donnée.

9. Procédé selon l'une des revendications précédentes, dans lequel la position de la caméra primaire (18a, 18b, 18c, 18d) est déterminée de manière à ce que son ouverture angulaire primaire (Pa, Pb, Pc, Pd) comprenne une intersection de ladite au moins une piste (V1) avec une voie de circulation (44).

10. Procédé selon la revendication précédente, dans lequel il comprend la détermination d'une région d'intersection (46) dans l'ouverture angulaire primaire (Pa, Pb, Pc, Pd) de la caméra primaire, cette région d'intersection (46) englobant l'intersection de ladite au moins une piste (V1) avec la voie de circulation (44).

11. Procédé selon la revendication 2, dans lequel la première ligne basse (106a) présente une inclinaison d'un angle α non nul par rapport à l'axe de ladite au moins une piste (V1).

12. Procédé selon la revendication précédente, dans lequel α est supérieur ou égal à 3°.

13. Procédé selon l'une des deux revendications précédentes, dans lequel la seconde ligne haute (106b) présente une inclinaison d'un angle β supérieur à l'angle α, l'angle β étant déterminé comme correspondant à l'angle maximal possible d'arrivée d'un aéronef sur ladite au moins une piste (V1).

14. Procédé selon la revendication précédente, dans lequel le système optronique comprend une caméra secondaire (16) mobile en rotation autour d'un axe vertical (34) de manière à ce que son axe optique puisse suivre un aéronef en mouvement, le procédé comprenant une étape subséquente de suivi d'un aéronef après indication de la présence d'un aéronef dans la région de fin d'approche (108) ou de fin d'éloignement.
